# EUROPEAN PATENT SPECIFICATION

(11) **EP 0 610 284 B1**
(45) Date of publication and mention of the grant of the patent: **16.04.1997**
(21) Application number: 92921822.0
(22) Date of filing: 19.10.1992
(51) Int. Cl.: E04F 19/08, H02G 3/28

(54) **PIPEWORK DUCTING**
ROHRLEITUNGSKANAL
CONDUITE DE TUYAUTERIE

(30) Priority: 23.10.1991 GB 9122485
(43) Date of publication of application: 17.08.1994
(73) Proprietor: MAYFIELD (MANUFACTURING) LIMITED, Horncastle, Lincolnshire LN9 5QQ (GB)
(72) Inventor: HICKSON, Malcolm Hedley, Horncastle, Lincolnshire LN9 5QQ (GB)
(74) Representative: Sommerville, John Henry
(86) International application number: GB9201921
(87) International publication number: WO9308348

(56) References cited:
- CH-A- 427 212
- CH-A- 529 897
- FR-A- 1 357 069
- NL-A- 6 600 598
- US-A- 3 593 472
- US-A- 3 984 621
- US-A- 4 562 635

## Description

### FIELD OF THE INVENTION

This invention relates to a channel member for use in forming a pipework duct in a floor, to a floor including such pipework ducting, and to a method of forming pipework ducting in a floor.

### BACKGROUND TO THE INVENTION

In locating, for example, central heating pipework in buildings having solid floors, it has been a common practice simply to embed the pipes, possibly within a sheath of insulation, within the concrete of the floor. This arrangement gives rise to problems if a leaking pipe is to be repaired after installation, or the layout of the installation is to be changed. It is desirable, therefore, to locate pipework in ducting to which access may more readily be gained for subsequent work on the pipes, and in the UK such an arrangement is now provided for by regulations. For convenience in forming such ducting, plastics channel members may be bedded in the concrete during formation of the floor, the channel members being provided with outwardly extending flanges which are supported by the underlying concrete and which in turn serve for location of a closure member for the channel. A problem which arises with such ducting is that, when forming the pipework, it is common practice to provide soldered joints, and the heat of the blowlamp used in the soldering operation can damage the plastics channel unless special care is taken. Further, the plastics channel is prone to mechanical damage during subsequent building operations before the floor is completed.

In order to provide sufficient thermal insulation, another type of floor is becoming more common. This provides on top of the concrete oversite slab a layer of substantially rigid insulating material such as an expanded plastics material, with boards, typically wood chipboard or the like, resting on top of the insulating material. For this type of flooring, the conventional plastics ducting channel member is inappropriate, since its tapering form and low mechanical strength make satisfactory installation difficult. Examples of typical known ducts are described in NL-A-600598, FR-A-1 357 069 and US 3593472.

### SUMMARY OF THE INVENTION

The present invention provides a channel member adapted for use in forming a pipework duct in an existing floor, the channel member being formed of a rigid material and comprising a base having a wall upstanding therefrom along two opposite sides of the base, characterised by each wall having no outwardly extending projections but having an inwardly directed flange extending therefrom at a short distance from the upper edge of the wall, each flange extending over a minor part of the width of the base.

Preferably, each wall is substantially at a right angle to the base. The channel member may be formed of galvanised steel or stainless steel, suitably being fabricated from sheet material, but is preferably formed as an extrusion, for example of aluminium or an alloy thereof. The channel member is suitable for location in a slot cut into the surface layer and insulating material of the insulated type of floor, with the portion of the surface layer cut out being positioned on the two inwardly directed flanges to form a closure for the duct.

Accordingly, a further aspect of the invention provides a floor of the type having a surface layer supported by a layer of rigid insulating material laid on the structural floor of, for example, wooden boarding, the floor including pipework ducting comprising one or more channel members in accordance with the invention, located within cut outs formed in the surface layer, the channel members being attached to the adjacent surface layer and the ducting preferably being closed by the portions of the surface layer wnich have been cut out, located on the inwardly directed flanges. Preferably the channel member rests on the solid underlying base of the floor, for example the concrete oversite slab, and is surrounded by insulating material. The channel member may be filled with further insulating material after installation of the pipes in order to preserve the insulating value of the floor and to minimise heat losses from the pipes therein.

It will be appreciated that, while the ducting formed in accordance with the invention is of particular use in connection with the installation of pipe work for central heating and the like, it may also be used for other types of pipework, such as cold water or gas supplies, or for electricity, telephone or other cables.

Another aspect of the invention provides a method of forming pipework ducting in a floor of the type having a solid base, a layer of a rigid insulating material thereon, and an upper surface layer of wooden or other boards, comprising cutting through and removing the upper surface layer and the insulating material to form a cut out corresponding to the ducting pattern required, locating one or more channel members as described above in the cut out so formed, securing the channel members to the surface layer within the cut out, and locating a closure member, for example the removed surface laver, on the flanges of the channel to close the duct.

With the channel member of the invention, installation of pipework and other ducting in floors is a simple operation, leaving an unobtrusive duct to which access may be readily obtained. While the channel member of the invention is particularly applicable to installation in floors of the type having boarding resting on insulating material, a version of the channel may be envisaged for installation into solid floors during their formation.

The channel member of the invention may also be installed into slots cut into existing concrete floors, and may be conveniently installed under suspended floors of the type having boarding located on joists where the channel member being located in slots cut into the joists.

While reference has been made to the use of the channel member in ducting in floors, the use of the channel member to form ducting in other surfaces such as walls and ceilings may also be envisaged.

### BRIEF DESCRIPTION OF THE DRAWINGS

Reference is made to the drawings, in which:
Figure 1 is a perspective view of a portion of a channel member in accordance with one embodiment of the invention;
Figures 2 and 3 are perspective views of a portion of floor partially sectioned showing stages in the installation of the channel member of the type shown in Figure 1 to form a pipework duct in the floor;
Figure 4 shows a sectional view on an enlarged scale of the completed pipework duct whose formation is illustrated in Figures 2 and 3; and
Figure 5 is a perspective view of a portion of a channel member according to a preferred embodiment of the invention.

### DETAILED DESCRIPTION OF THE ILLUSTRATED EMBODIMENTS

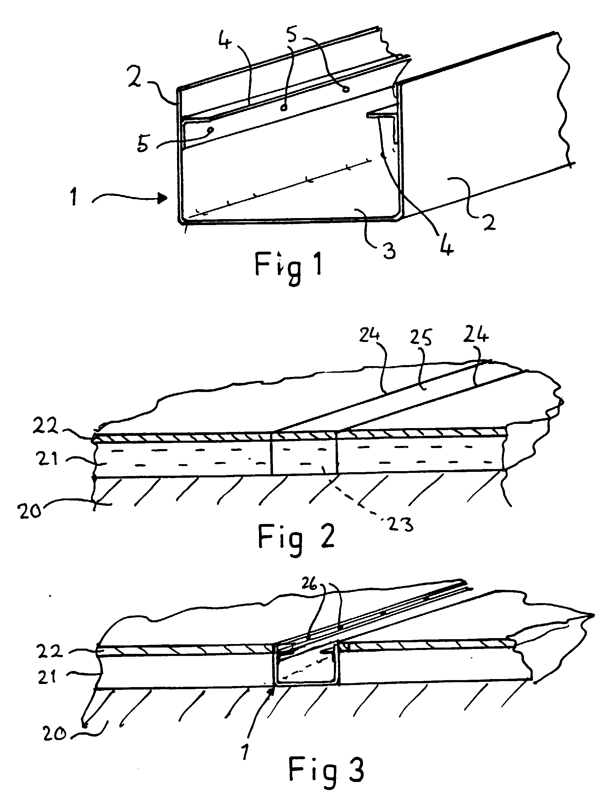

Referring first to Figure 1, the channel member 1 is conveniently formed from a sheet of galvanised steel bent to form two walls 2 upstanding at right angles from a base 3. The height of the walls 2 from the base 3 is chosen to be just less than the sum of the thickness of the insulation material and the surface layer boarding. Each wall 2 has a longitudinal flange 4 extending inwardly therefrom. Each flange 4 is formed by an L section member attached to the wall 2 by spot welds 5 at intervals therealong. The distance between the upper face of the flange 4 and the underside of the base 3 corresponds to the thickness of the insulation used in the floor. The use of steel in the fabrication of the channel member means that the channel member will be undamaged by the application of a blow lamp during pipe soldering operations, while providing sufficient strength to support that portion of the floor overlying the channel. In addition, the steel may be readily cut to permit the formation of junctions or elbows in the ducting layout.

Figure 2 illustrates the type of floor having a concrete base 20 upon which is located a slab 21 of an expanded plastics material, for example expanded polystyrene, to provide thermal insulation, the upper surface of the floor being finished by wooden particle boards or chipboard 22 which is conveniently presented as panels arranged to be inter connected by tongue and groove joints which, for strength, are glued together during installation. The chipboard is suitably a high density flooring grade chipboard.

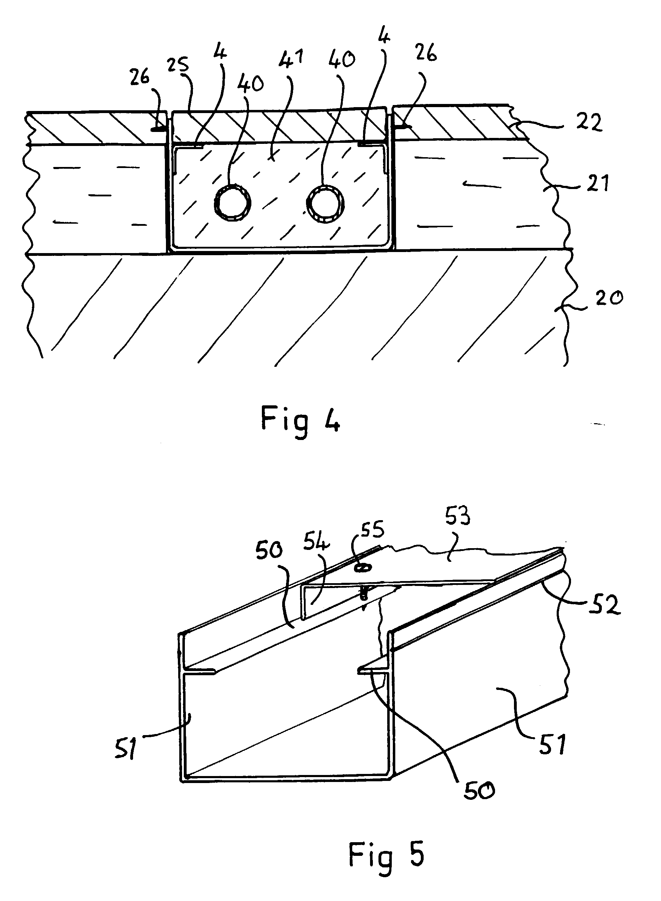

In the formation of a pipework duct, a slot 23 is cut into the chipboard and the insulation material, for example using a circular saw, the two cuts 24 being such as to permit the section of board 25 to be lifted free and replaced as hereinafter described with reference to Figure 4.

The insulation material is removed from the slot 23 and a channel member 1, of the type described with reference to Figure 1, is dropped into the resulting cut out, as illustrated in Figure 3. The channel member 1 is secured to the surrounding chipboard flooring 22 by nails or other fastenings 26 passing through holes in the upper part of the walls 2.

Figure 4 shows a sectional view of the completed duct. Pipes 40 are located within the duct, supported as intervals therealong by, for example, wooden blocks (not shown). Insulating material 41 is then packed around the pipes up to the level of the flanges 4. Particulate mineral insulation materials are particularly suitable for this purpose. The cut out section of floor 25 is then dropped back into the channel member so as to rest on the flanges 4 and close the duct. Fastening of the member 25 to the channel member should not normally be required, but if it is does become necessary, attachment may be effected by the use of, for example, self tapping screws passing through the member 25 and engaging holes drilled in the flanges 4.

It will be understood that floor structures as illustrated in Figures 2, 3 and 4 will normally be provided with an impervious membrane, for example of polyethylene sheeting, between the upper surface of the concrete oversite slab and the insulation material, as well as beneath the concrete. Alternatively, the membrane may overlie the insulation material.

Figure 5 illustrates a channel member in accordance with a preferred embodiment of the invention, formed as an aluminium extrusion having an overall rectangular U-shaped cross-section with a longitudinal fin or flange 50 extending inwardly from each side wall 51 of the member at a distance from the upper edge sufficient to accommodate a wood or chipboard lid for the channel. A line 52 is scored during extrusion along the outer surface of each side wall 51 equidistantly between the upper edge of the wall and the upper edge of the flange 50 to assist in the drilling of fixing holes. By pre-drilling the fixing holes before positioning the channel member in the floor, it can readily be fixed in place with suitable screws into the surrounding chipboard flooring. It may be convenient to supply the channel member with a pre-cut lid of high density chipboard to avoid difficulties in fitting the lid using the cut-out portions from the floor, or for use when the channel member is located in a concrete floor. A preferred form of lid is shown in Figure 5, comprising a shallow extruded aluminium channel 53 which is located with its sides 54 resting on the flanges 50, and is fixed in place using self-tapping screws 55 engaging in holes drilled in the flanges. The screws 55 are counter-sunk into the base of the channel 53.

It will be appreciated that the channel members can be formed in a wide range of widths and depths to suit different uses. The provision of the extruded lid as described with reference to Figure 5 permits a fairly shallow duct to accommodate a number of pipes or cables. This may be important where highly insulating materials of smaller thickness are incorporated into a floor.

## Claims

1. A channel member (1) adapted for use in forming a pipework duct in an existing floor, the channel member (1) being formed of a rigid material and comprising a base (3) having a wall (2) upstanding therefrom along two opposite sides of the base (3) characterised by each wall having no outwardly extending projections but having an inwardly directed flange (4) extending therefrom at a short distance from the upper edge of the wall, each flange extending over a minor part of the width of the base.

2. A channel member according to Claim 1, wherein each wall (2) is substantially at a right angle to the base (3).

3. A channel member according to Claim 1 or 2, integrally formed as an extrusion.

4. A floor of the type having a surface layer (22) supported by a layer of rigid insulating material (21) laid on the structural floor (20), the floor including pipework ducting comprising one or more channel members (1) according to Claim 1, 2 or 3, located within cut outs formed in the surface layer, the channel members (1) being attached to the adjacent surface layer and the ducting being closed by a closure member (25) located on the inwardly directed flanges.

5. A floor according to Claim 4, wherein the ducting is closed by the portions of the surface layer which have been cut out.

6. A floor according to Claim 4 or 5, wherein the or each channel member rests on the solid underlying base of the floor and is surrounded by insulating material beneath the surface layer.

7. A method of forming pipework ducting in a floor of the type having a solid base (20), a layer of rigid insulating material (21) thereon, and an upper surface layer (22) of wooden or other board, comprising cutting through and removing the upper surface layer (22) and the insulating material (21) to form a cut out corresponding to the ducting pattern required, locating one or more channel members (1) as claimed in Claim 1, in the cut out so formed, securing the channel members (1) to the surface layer (22) within the cut out, and locating a closure member (25) on the flanges of the channel to close the duct.

8. A method according to Claim 7, wherein the closure member is formed by the removed portion of the surface layer.

9. A method according to Claim 7 or 8, comprising locating pipework or cabling within the ducting and surrounding the pipework or cabling within the ducting and surrounding the pipework or cabling with insulating material before closing the duct.

10. A method according to Claim 7, 8 or 9, wherein the channel member (1) is integrally formed as an extrusion.

## Patentansprüche

1. Bei der Ausbildung einer Rohrleitung in einem bestehenden Fußboden verwendbares Kanalelement (1), welches aus einem starren Material gebildet ist und eine Basis (3) mit einer an beiden gegenüberliegenden Seiten der Basis (3) aufrecht stehenden Wand (2) aufweist, dadurch gekennzeichnet, daß jede Wand keine nach außen verlaufenden Vorsprünge, jedoch einen nach innen gerichteten Flansch (4) aufweist, welcher in kurzem Abstand von der Oberkante der Wand und über einen kleineren Teil der Basisbreite verläuft.

2. Kanalelement nach Anspruch 1, dadurch gekennzeichnet, daß jede Wand (2) im wesentlichen rechtwinklig zur Basis (3) ist.

3. Kanalelement nach Anspruch 1 oder 2, dadurch gekennzeichnet, daß es einstückig extrudiert ist.

4. Fußboden mit einer Oberflächenschicht (22), welche durch eine auf den selbsttragenden Boden (20) gelegte Schicht (21) aus starrem Isolationsmaterial gestützt wird, wobei der Fußboden einen Rohrleitungskanal mit einem oder mehreren Kanalelementen (1) entsprechend den Ansprüchen 1, 2 oder 3 aufweist, welche innerhalb Aussparungen angeordnet sind, die in der Oberflächenschicht ausgebildet sind, wobei die Kanalelemente (1) an der benachbarten Oberflächenschicht befestigt und der Kanal durch ein auf den nach innen gerichteten Flanschen angeordnetes Deckelelement (25) geschlossen ist.

5. Fußboden nach Anspruch 4, dadurch gekennzeichnet, daß der Kanal durch Bereiche der Oberflächenschicht verschlossen ist, welche herausgeschnitten wurden.

6. Fußboden nach Anspruch 4 oder 5, dadurch gekennzeichnet, daß das oder jedes Kanalelement auf der festen Unterlage des Fußbodens ruht und durch das Isolationsmaterial unter der Oberflächenschicht umgeben ist.

7. Verfahren zum Ausbilden eines Rohrleitungskanals in einem Fußboden mit einer festen Unterlage (20), einer darauf angeordneten Schicht (21) aus starrem Isolationsmaterial und einer Oberflächenschicht (22) aus Holz oder anderen Platten, mit den Schritten: Durchschneiden und Entfernen der Oberflächenschicht (22) und des Isolationsmaterials (21), um eine Aussparung entsprechend dem erforderlichen Kanalverlauf zu erzielen, Positionieren eines oder mehrerer Kanalelemente (1), wie in Anspruch 1 beansprucht, in der derart ausgebildeten Aussparung, Befestigen der Kanalelemente (1) an der Oberflächenschicht (22) innerhalb der Aussparung und Positionieren eines Deckelelements (25) auf den Flanschen des Kanals, um die Rohrleitung zu schließen.

8. Verfahren nach Anspruch 7, dadurch gekennzeichnet, daß das Deckelelement aus entfernten Bereichen der Oberflächenschicht besteht.

9. Verfahren nach Anspruch 7 oder 8, gekennzeichnet durch die Schritte: Positionieren der Rohrleitung oder Kabel innerhalb des Kanals und Umgeben der Rohrleitung oder Kabel innerhalb des Kanals mit Isolationsmaterial, bevor der Kanal verschlossen wird.

10. Verfahren nach Anspruch 7, 8 oder 9, dadurch gekennzeichnet, daß das Kanalelement (1) einstückig extrudiert wird.

## Revendications

1. Elément de canal (1) adapté pour être utilisé pour former un conduit de tuyauterie dans un sol existant, l'élément de canal (1) étant formé d'une matière rigide et comprenant un fond (3) ayant une paroi (2) s'élevant verticalement depuis celui-ci, le long de deux côtés opposés du fond (3), caractérisé en ce que chaque paroi ne comporte pas de projections s'étendant vers l'extérieur, mais a un flanc (4) dirigé vers l'intérieur, s'étendant depuis celui-ci, à une courte distance du bord supérieur de la paroi, chaque flanc s'étendant sur une faible partie de la largeur du fond.

2. Elément de canal selon la revendication 1, dans lequel chaque paroi (2) fait sensiblement un angle droit avec le fond (3).

3. Elément de canal selon la revendication 1 ou 2, formé intégralement par extrusion.

4. Sol du type ayant une couche de surface (22) supportée par une couche de matière isolante rigide (21) posée sur la structure du sol (20), le sol comportant un conduit pour tuyauteries comportant un ou plusieurs éléments de canaux (1) selon la revendication 1, 2 ou 3, placé dans des découpages formés dans la couche de surface, les éléments de canaux (1) étant attachés à la couche de surface adjacente et le conduit étant fermé par un élément de fermeture (25) placé sur les flancs dirigés vers l'intérieur.

5. Sol selon la revendication 4, dans lequel le conduit est fermé par les parties de la couche de surface qui ont été découpées.

6. Sol selon la revendication 4 ou 5, dans lequel l'élément de canal ou chaque élément de canal repose sur la couche de fond solide du sol et est entouré de matière isolante en dessous de la couche de surface.

7. Procédé pour réaliser un conduit pour tuyauterie dans un sol du type ayant un fond (10) solide, une couche de matière isolante rigide (21) sur celui-ci, et une couche de surface supérieure (22) en bois ou en d'autres panneaux, comprenant le découpage et le retrait de la couche de surface supérieure (22) et de la matière isolante (21) pour former un découpage correspondant au modèle du conduit requis, la mise en place d'un ou de plusieurs éléments de canaux (1) tels que revendiqués dans la revendication 1, dans le découpage ainsi réalisé, la fixation des éléments de canal (1) à la couche de surface (22) dans le découpage, et la mise en place d'un élément de fermeture (25) sur les flancs du canal pour fermer le conduit.

8. Procédé selon la revendication 7, dans lequel l'élément de fermeture est formé par la partie retirée de la couche de surface.

9. Procédé selon la revendication 7 ou 8, comprenant la mise en place d'un tuyau ou d'un câble dans le conduit et l'entourage du tuyau ou du câble dans le conduit et l'entourage du tuyau ou du câble avec de la matière isolante avant la fermeture du conduit.

10. Procédé selon la revendication 7, 8, ou 9, dans lequel l'élément de canal (1) est entièrement formé par extrusion.
